Europäisches Patentamt

European Patent Office

Office européen des brevets

(19)

(11) Numéro de publication **0 007 830**
B1

(12) **FASCICULE DE BREVET EUROPEEN**

(45) Date de publication du fascicule du brevet: **27.01.82**

(51) Int. Cl.³: **B 63 B 21/52, G 01 S 1/72**

(21) Numéro de dépôt: **79400453.1**

(22) Date de dépôt: **03.07.79**

(54) **Bouée aéroportée largable.**

(30) Priorité: **18.07.78 FR 7821276**

(43) Date de publication de la demande:
**06.02.80 Bulletin 80/3**

(45) Mention de la délivrance du brevet:
**27.01.82 Bulletin 82/4**

(84) Etats contractants désignés:
**DE GB IT NL**

(56) Documents cités:
**FR - A - 1 350 863**
**FR - A - 2 315 434**
**US - A - 2 907 875**
**US - A - 3 161 896**
**US - A - 4 033 529**

(73) Titulaire: **THOMSON-CSF**
**173, Boulevard Haussmann**
**F-75360 Paris Cedex 08 (FR)**

(72) Inventeur: **Suppa, Vito**
**"THOMSON-CSF" - SCPI 173, bld Haussmann**
**F-75360 Paris Cedex 08 (FR)**

(74) Mandataire: **Trocellier, Roger et al,**
**"THOMSON-CSF" - SCPI 173, bld Haussmann**
**F-75360 Paris Cedex 08 (FR)**

Courier Press, Leamington Spa, England.

Bouée aéroportée largable

La présente invention se rapporte à des bouées qui sont larguées d'un aéronef et plus spécialement aux radiobouées sonores, qui sont destinées une fois à l'eau, à transmettre radio-électriquement divers paramètres et informations sous-marins, détectés par des récepteurs acoustiques. Ces radiobouées comportent généralement un flotteur muni d'une antenne ainsi que d'un hydrophone qui, rattaché au flotteur descend à une certaine profondeur pour détecter les bruits acoustiques, Les signaux électriques de l'hydrophone sont traités et appliqués à l'antenne radioélectrique.

La chute de la bouée après son largage doit être freinée et doit être aérodynamiquement stable, pour qu'après l'impact sur l'eau, la flottabilité soit assurée et que les systèmes radioélectriques et acoustiques se mettent en place de façon à fonctionner correctement.

Suivant l'art antérieur il est connu d'utiliser un ballon comme floteur. Ce ballon se gonfle au cours de la chute et une fois arrivé sur l'eau, l'air se trouve emprisonné dans le ballon et assure la flottabilité, lorsque le ballon est arrivé sur l'eau.

Ce dispositif présente toutefois, l'inconvénient d'un gonflage lent, qui ne permet pas le lâcher à basse altitude. De plus au cours de la chute il y a le risque que le ballon se mette en torche provoquant la perte de la bouée.

Il est connu par ailleurs de ralentir la chute du ballon par un parachute avec l'inconvénient de l'utilisation de suspentes ou drisses.

L'invention a alors pour objet une bouée largage d'un aéronef dans l'eau, comprenant un ballon gonflable attaché à un conteneur par l'intermédiaire d'une pièce de liaison, le ballon se gonflant pendant la chute par un moyen d'entré forcée de l'air, caractérisé par le fait que ce moyen comporte des pièces mécaniques appelées pelles attachées à la pièce de liaison par une fixation élastique permettant une articulation de ces pelles autour d'une charnière d'un angle prédéterminé et qu'au repos des ressorts de rappel ramènent ces pelles contre le conteneur et que les pelles étant soulevées en position écartée découvrant chacune un passage d'admission de fluide défini entre la pièce de liaison et la paroi externe du conteneur et formant avec cette paroi externe une canalisation rigide d'entrée de fluide dans une cavité de la pièce de liaison par le passage d'admission, des trous étant formés dans la pièce de liaison pour mettre en communication la cavité et l'intérieur du ballon, une membrane formant clapet antiretour étant prévue interrompant normalement la communication de fluide entre le conduit et l'intérieur du ballon, et autorisant ladite communication lorsque la pression dans le conduit est supérieure à la pression à l'intérieur du ballon.

Suivant une autre caractéristique de l'invention, le ballon est muni sur sa partie supérieure de poches, traversées par l'air en cours de la chute et ces courants d'air produisent une pression stabilisant le ballon en rotation au cours de cette chute.

D'autres caractéristiques et avantages apparaitront au cours de la description d'un exemple de l'invention, donné à l'aide des figures qui représentent:

— la figure 1, une vue générale de la bouée largable suivant l'invention;
— la figure 2, une vue détaillée du dispositif de gonflage par entrée forcée de l'air.

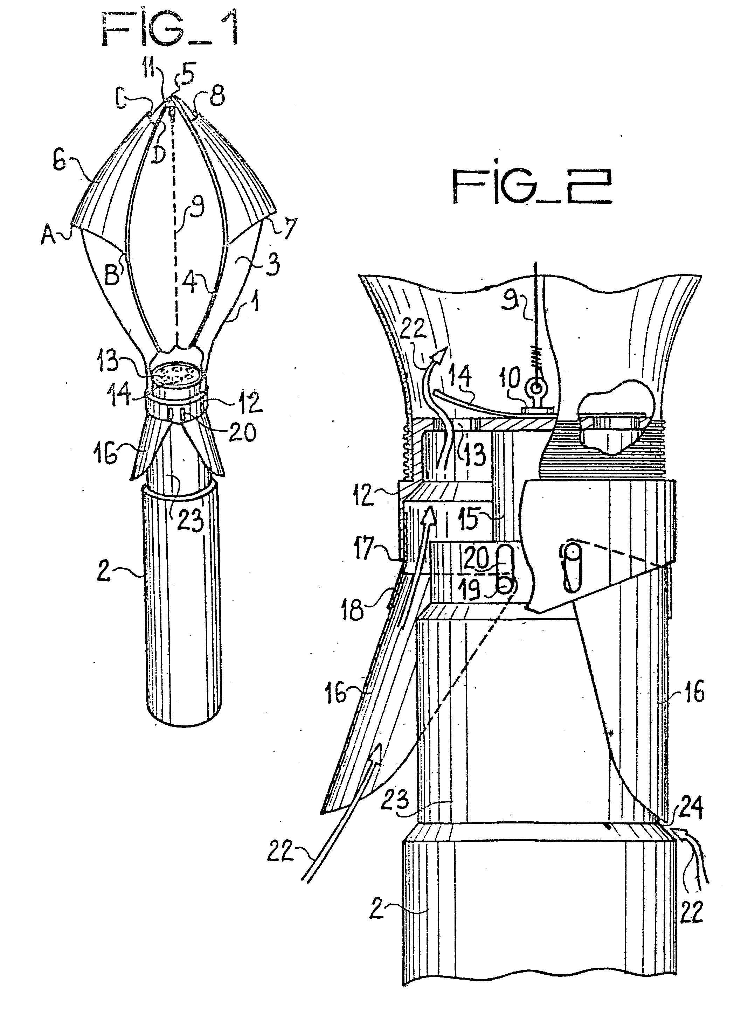

Sur la figure 1, on a représenté le ballon 1, dans un exemple de réalisation, avec le conteneur 2 qu'il supporte et qui contient les hydrophones avec l'électronique associée. Le ballon 1 après sa chute joue le rôle de flotteur et il contient une antenne radioélectrique 9, qui doit être maintenue au-dessus de l'eau. Le ballon a un axe de symétrie et il comprend un certain nombre de surfaces 3 en toile plastifiée, assemblées entre elles par des coutures ou soudures telles que 4. Les coutures ou soudures se trouvent dans des plans de symétrie du ballon passant par le sommet 5. Sur la surface extérieure et dans la partie supérieure du ballon sont fixées des poches telles que 6. Ces poches ont une ouverture inférieure 7 et une ouverture supérieure 8 permettant le passage de l'air, qui exerce une pression sur la surface 3 au-dessous de la poche.

Suivant une réalisation de l'invention une des parois des poches est constituée par la surface du ballon.

Ces poches peuvent être constituées par le même matériau que le ballon proprement dit et dans l'exemple de réalisation des poches sont également fixées sur les coutures ou soudures 4. Seulement une seule surface telle que 3 sur deux est munie d'une poche. Pour des questions de stabilité de l'ensemble, il est préférable que le nombre de poches soit impair. Dans cet exemple de réalisation, on a six surfaces telles que 3 et trois poches telles que 6. Si l'on appelle ABCD les sommets d'une poche et $L_7$ et $L_8$ les longueurs développées AB et CD de cette poche; et si par ailleurs on appelle $l_7$ et $l_8$ les longueurs développées AB et CD sur les surfaces 3, on prend pour cette réalisation $L_7$, $L_8$, $l_7$ et $l_8$ telles que:

$$L_8/l_8 = L_7 \; l_7 = 1,05$$

Si H est la longueur d'une couture ou soudure telle que 4 et la hauteur d'une poche de longueur développée h:AC=BD, on prend généralement h/H compris entre 0,25 et 0,44.

L'antenne radioélectrique 9 est tendue entre les points d'attache inférieur 10 et supérieur 5 par l'intermédiaire d'un élément élastique 11.

La figure 2 montre la fixation du ballon sur la pièce de laiaison 12 avec le conteneur 2. On y voit les trous 13, une membrane d'élastomère 14 fixée en son centre 10 et pouvant fermer les trous 13 du côté inférieur du ballon. Un compartiment 15 contenant l'émetteur radioélectrique est fixé sur la partie 12. Le compartiment 15 peut également recevoir divers mécanismes, selon les fonctions dévolues au conteneur 2.

Des pièces mécaniques incurvées 16 ayant la forme de pelles, qui seront pour cette raison appelées "pelles" par la suite, permettent l'entrée forcée de l'air dans le ballon. Elles sont articulées par la lame 18 autour de la charnière 17, réalisée par l'élasticité d'une lame métallique mince.

Les pelles 16 portent à leur extrémité supérieure un ergot 19 qui coulisse dans des fentes telles que 20 de la pièce 12, visibles également sur la figure 1.

Le chemin suivi par l'air lors du gonflage est représenté sur la figure par les flèches 22. La partie supérieure 23 du conteneur appelée "col", sert d'appui aux pelles 16 quand elles sont en position abaissée (à droite sur la figure 2).

L'ensemble représenté figure 1 est destiné à être largué d'un aéronef, avion ou hélicoptère, au dessus de la mer au niveau de laquelle il arrive à une vitesse suffisamment modérée, de l'ordre de 50 noeuds (90Km/heure) pour résister à l'impact. Le ballon joue alors le rôle de flotteur pour le conteneur 2 qui retransmet alors, grâce à son antenne 9, diverses informations et paramètres sous-marins.

Le fonctionnement de cette bouée largable selon l'invention est le suivant:

Cette bouée étant par exemple lancée d'avion, l'air s'engouffre dans l'espace résiduel 24 existant entre les pelles 16, maintenues dans leur position de repos, le long du conteneur 2 par les lames élastiques 18, et le col 23. Les pelles 16 se soulèvent alors en tournant autour de leur charnière 17 en offrant un espace de plus en plus grand au passage de l'air. Les pelles s'arrêtent après une rotation d'environ 20° limitée par l'arrivée en butée des ergots 19 au bas des fentes 20.

L'air suit le chemin indiqué par les flèches 22 et passe par les trous 13 en soulevant la membrane 14 pour pénétrer dans le ballon I replié dans un récipient (non représenté sur les figures), qui se soulève au gonflage et se trouve éjecté. Le rôle de cette membrane 14 est le suivant:cet air de gonflage a une pression dynamique de l'ordre de $1/2 \, \rho \, V^2$, $\rho$ représentant la densité de l'air et V la vitesse de chute du ballon, avec de grandes fluctuations, car le régime d'écoulement le long du corps 2 est turbulent. A chaque fois que cette pression dynamique est supérieure à la pression statique régnant dans le ballon, la membrane se soulève pour laisser passer l'air vers le ballon et se rabaisse après en jouant le rôle de soupape permettant de gonfler le ballon au maximum de la pression dynamique rencontrée tout au cours de la descente. Cet aspect est important car il est connu que la rigidité des structures gonflables varie de façon très importante avec leur pression de gonflage. Le fait de gonfler le ballon à la pression maximale rencontrée va permettre de mieux régulariser l'écoulement de l'air sur l'extérieur du ballon comme il sera vu plus loin.

Le procédé de gonflage suivant l'invention, grâce à l'utilisation d'air forcé canalisé par les pelles rigides, est assimilable à un véritable remplissage à l'aide d'une bouteille d'air comprimé et en possède la sûreté de fonctionnement, car il évite les cas de non déploiement du ballon.

Une fois le ballon 1 gonflé, commence la phase de descente aérofreinée. Cet aérofreinage est obtenu pratiquement par la seule trainée aérodynamique du ballon I dont la forme et le volume sont calculés respectivement d'une part, pour réaliser cette trainée et assurer une arrivée sur l'eau à une vitesse de l'ordre de 50 noeuds, et d'autre part, pour assurer la flottaison de l'ensemble une fois sur l'eau.

L'expérience montre cependant, que le régime d'écoulement de l'air le long des surfaces 3 du ballon I n'est pas un écoulement laminaire, mais un écoulement fortement perturbé de type turbulent, par suite de l'apparition de vortex le long du conteneur 2 de la bouée. Le résultat de cet écoulement est un tournoiement du ballon du type toupie autour de l'axe de descente, un faseyment des surfaces 3, un fouettage et un gonflement incomplet.

Suivant une des caractéristiques de l'invention on remédie à ces inconvénients par des poches telles que 6 (figure 1) qui présentent à l'air un conduit forcé entre leur entrée 7 et leur sortie 8.

La longueur $L_7$ de l'entrée 7 est supérieure à la longueur $L_8$ de la sortie 8. L'air est ainsi plaqué contre les surfaces 3 du ballon. Les poches ne changent pratiquement pas la vitesse de chute limite du ballon et ne jouent donc pas un rôle d'aérofrein ou de parachute. Par contre elles stabilisent le ballon au cours de la chute et évitent le tournoiement, le faseyment des surfaces 3 et le fouettage et permet un gonflage complet.

Dans une réalisation, le ballon comporte 6 surfaces telles que 3 réalisées en un matériau imperméable collé et cousu ou soudé aux ultrasons, le matériau étant de préférence de la toile plastique. Suivant une réalisation l'une des parois des poches est constituée par la surface du ballon.

Les poches 6 sont au nombre de 3. D'une façon générale, si 2n représentent le nombre de surfaces 3 élémentaires, l'expérience montre qu'un nombre n de poches 6 est suffisant pour une bonne stabilisation. Dans un autre type de réalisation, le ballon 1 est réalisé d'un seul morceau, c'est à dire sans couture, et une bonne stabilisation est encore obtenue par des poches recouvrant sa partie supérieure sur un développement représentant entre le tiers et la moitié de celui du ballon, le nombre de ces poches étant de 3.

On a vu que dans une réalisation on prend 1,05 pour les rapports $L_7/l_7$ et $L_8/l_8$ ou $l_7$ et $l_8$ sont les longueurs développées sur les surfaces 3 correspondant aux ouvertures 7 et 8.

Ce rapport en fait doit être compris entre 1,1 et 1; et même pour cette dernière valeur, l'air peut passer, la surface 3 se creusant vers l'intérieur.

En conclusion grâce à la présente invention on peut réaliser de façon simple des bouées radioélectriques sonores avec une chute bien contrôlée.

**Revendications**

1. Bouée largable d'un aéronef dans l'eau, comprenant un ballon (1) glonflable attaché à un conteneur (2) par l'intermédiaire d'une pièce de liaison (12), le ballon se gonflant pendant la chute par un moyen d'entrée forcée de l'air, caractérisée par le fait que ce moyen comporte des pièces mécaniques appelées pelles (16) attachées à la pièce de liaison (12) par une fixation élastique, permettant une articulation de ces pelles autour d'une charnière (17) d'un angle prédéterminé et qu'au repos des ressorts de rappel ramènent ces pelles (16) contre le conteneur (2) et que les pelles étant soulevées en position écartée découvrant chacune un passage d'admission de fluide défini entre la pièce de liaison (12) et la paroi externe du conteneur et formant avec cette paroi externe une canalisation rigide d'entrée de fluide dans une cavité de la pièce de liaison par le passage d'admission, des trous (13) étant formés dans la pièce de liaison (12) pour mettre en communication la cavité et l'intérieur du ballon, une membrane (14) formant clapet antiretour étant prévue, interrompant normalement la communication de fluide entre le conduit et l'intérieur du ballon, et autorisant ladite communication lorsque la pression dans le conduit est supérieure à la pression à l'intérieur du ballon.

2. Bouée largable suivant la revendication 1, caractérisée en ce que les pelles (16) sont en matériau rigide.

3. Bouée largable suivant la revendication 1, caractérisée en ce que le ballon (1) comporte au moins deux poches disposées extérieurement le long de la moitié supérieure du ballon, et comportant des ouvertures à leur partie inférieure et à leur partie supérieure.

4. Bouée largable suivant la revendication 3, caractérisée en ce que les poches couvrent environ la moitié de la surface supérieure du ballon (1).

5. Bouée largable suivant la revendication 3, caractérisée en ce que les poches sont réalisées dans un matériau souple et imperméable.

6. Bouée largable suivant la revendication 3, caractérisée en ce que l'une des parois des poches est constituée par la surface du ballon.

7. Bouée largable suivant la revendication 3, caractérisée en ce que le rapport des longueurs développées des ouvertures des poches aux longueurs correspondantes sur le ballon est compris entre 1 et 1,1.

8. Bouée largable suivant la revendication 3, caractérisée en ce que le rapport de la longueur développée de l'ouverture inférieure des poches à celle de la longueur développée de l'ouverture supérieure des poches à une valeur, qui est supérieure à 1 et ne dépasse pas 5.

9. Bouée largable suivant la revendication 3, caractérisée en ce que le matériau de la poche est identique à celui du ballon (1).

10. Bouée largable suivant la revendication 3, caractérisée en ce que le matériau de la poche est choisi de façon à ce que l'on puisse souder thermiquement la poche sur le ballon (1).

11. Bouée largable suivant la revendication 1, caractérisée en ce que la bouée est une bouée radioélectrique sonore et que l'antenne d'émission radioélectrique (9) est montée dans le ballon (1) et que le conteneur (2) contient l'émetteur radioélectrique et les dispositifs de sondage acoustique.

**Claims**

1. Buoy to be thrown from an aircraft into the water, comprising an inflatable balloon (1) attached to a container (2) through a connecting member (12), the balloon being inflated during the fall by means for forced introduction of air, characterized by the fact that these means comprise mechanical members termed shovels (16) and attached to the connecting member (12) through a resilient fixture allowing these shovels to be pivoted about a hinge (17) through a predetermined angle, and that, when at rest, return springs return these shovels (16) towards the container (2) and that the shovels are lifted into a spread position each exposing a fluid supply passage defined between the connecting member (12) and the outer wall of the container and forming with this outer wall a rigid canalization for the introduction of fluid into a cavity of the connecting member through the supply passage, holes (13) being formed in the connecting member (12) for bringing the cavity into communication with the inside of the balloon, a membrane (14) forming a check valve being provided normally interrupting the fluid communication between the conduit and the inside of the balloon, and permitting communication when the pressure within the conduit exceeds the pressure inside the balloon.

2. Throwable buoy in accordance with claim 1, characterized in that the shovels (12) are of a rigid material.

3. Throwable buoy in accordance with claim 1, characterized in that the balloon (1) comprises at least two pockets arranged outside along the upper half of the balloon and comprising openings at their lower and upper portions.

4. Throwable buoy in accordance with claim 3, characterized in that the pockets cover about half of the upper surface of the balloon (1).

5. Throwable buoy in accordance with claim 3, characterized in that the pockets are made of a flexible and impervious material.

6. Throwable buoy in accordance with claim 3, characterized in that one of the pocket walls is formed by the balloon surface.

7. Throwable buoy in accordance with claim 3, characterized in that the ratio of the developed lengths of the pocket openings to the corresponding lengths on the balloon is within 1 and 1.1.

8. Throwable buoy in accordance with claim 3, characterized in that the ratio of the developed length of the lower opening of the pockets to the developed length of the upper opening of the pockets has a value exceeding 1 but not exceeding 5.

9. Throwable buoy in accordance with claim 3, characterized in that the material of the pocket is identical with that of the balloon (1).

10. Throwable buoy in accordance with claim 3, characterized in that the pocket material is selected in a manner to permit thermal sealing of the pocket on the balloon (1).

11. Throwable buoy in accordance with claim 1, characterized in that the buoy is a radioelectric acoustic buoy and that the radioelectric transmitter antenna (9) is mounted within the balloon (1) and the container (2) contains the radioelectric transmitter and the acoustic exploring devices.

## Patentansprüche

1. Boje, die von einem Flugzeug ins Wasser abwerfbar ist, mit einem aufblasbaren Ballon (1), der an einem Behälter (2) über ein Verbindungsteil (12) befestigt ist, wobei der Ballon sich während des Falls durch Mittel zur Zwangseinleitung von Luft aufbläht, dadurch gekennzeichnet, daß diese Mittel mechanische Teile umfassen, die als Schaufeln (16) bezeichnet sind und an dem Verbindungsteil (12) über eine elastische Halterung befestigt sind, welche eine Anlenkung dieser Schaufeln um ein Scharnier (17) mit einem vorbestimmten Winkel ermöglichen, und daß im Ruhezustand Rückholfedern diese Schaufeln (16) gegen den Behälter (2) zurückführen und die Schaufeln im angehobenen und gespreizten Zustand jeweils einen zwischen dem Verbindungsteil (12) und der Außenwandung des Behälters begrenzten Fluidzuführungskanal freigeben und mit dieser Außenwandung eine starre Kanalisation zur Einleitung von Fluid über den Zuführungskanal in einen Hohlraum des Verbindungsteils bilden, wobei Löcher (13) in dem Verbindungsteil (12) gebildet sind, um den Hohlraum mit dem Innenraum des Ballons in Verbindung zu bringen, und wobei eine ein Rückschlagventil bildende Membran (14) vorgesehen ist, die normalerweise die Fluidverbindung zwischen der Leitung und dem Innenraum des Ballons unterbricht und diese Verbindung freigibt, wenn der Druck in der Leitung höher ist als der Druck im Inneren des Ballons.

2. Abwerfbare Boje nach Anspruch 1, dadurch gekennzeichnet, daß die Schaufeln (12) aus starrem Material sind.

3. Abwerfbare Boje nach Anspruch 1, dadurch gekennzeichnet, daß der Ballon (1) wenigstens zwei Taschen aufweist, die auf der Außenseite längs der oberen Hälfte des Ballons angeordnet sind und an ihrem unteren Teil und ihrem oberen Teil Löcher aufweisen.

4. Abwerfbare Boje nach Anspruch 3, dadurch gekennzeichnet, daß die Taschen etwa die Hälfte der oberen Oberfläche des Ballons (1) bedecken.

5. Abwerfbare Boje nach Anspruch 3, dadurch gekennzeichnet, daß die Taschen aus einem geschmeidigen und wasserundurchlässigen Material gebildet sind.

6. Abwerfbare Boje nach Anspruch 3, dadurch gekennzeichnet, daß eine der Wandungen der Taschen durch die Oberfläche des Ballons gebildet ist.

7. Abwerfbare Boje nach Anspruch 3, dadurch gekennzeichnet, daß das Verhältnis der abgewickelten Längen der Taschenöffnungen zu den entsprechenden Längen auf dem Ballon zwischen 1 und 1,1 liegt.

8. Abwerfbare Boje nach Anspruch 3, dadurch gekennzeichnet, daß das Verhältnis der abgewickelten Länge der unteren Öffnung der Taschen zu der abgewickelten Länge der oberen Länge der Taschen einen Wert hat, der größer als 1 ist und 5 nicht überschreitet.

9. Abwerfbare Boje nach Anspruch 3, dadurch gekennzeichnet, daß die Tasche aus demselben Material gebildet ist wie der Ballon (1).

10. Abwerfbare Boje nach Anspruch 3, dadurch gekennzeichnet, daß das Material, aus dem die Taschen gebildet sind, so gewählt ist, daß die Tasche thermisch an dem Ballon (1) angeschweißt werden kann.

11. Abwerfbare Boje nach Anspruch 1, dadurch gekennzeichnet, daß die Boje eine radioelektrische akustische Boje ist und die radioelektrische Sendeantenne (9) in dem Ballon (1) montiert ist, während der Behälter (2) den radioelektrischen Sender und die Abhorchvorrichtungen enthält.

FIG_1

FIG_2

0 007 830

1